(19) Europäisches Patentamt

European Patent Office

Office européen des brevets

(11) **EP 0 886 085 B1**

(12) **EUROPEAN PATENT SPECIFICATION**

(45) Date of publication and mention
of the grant of the patent:
**03.04.2002 Bulletin 2002/14**

(51) Int Cl.⁷: **F16H 55/30**

(21) Application number: **97830289.1**

(22) Date of filing: **18.06.1997**

(54) **Sprocket wheel with improved tooth profile for greater silentness**

Kettenrad mit zur Geräuschlosigkeit verbessertem Zahnprofil

Pignon de chaîne avec profil de dent amélioré pour silence

(84) Designated Contracting States:
**DE ES FR GB IT SE**

(43) Date of publication of application:
**23.12.1998 Bulletin 1998/52**

(73) Proprietor: **Morse Tec Europe S.p.A.**
**20121 Milano (IT)**

(72) Inventor: **Baddaria Giuseppe**
**22059 Robbiate (Lecco) (IT)**

(74) Representative: **Zavattoni, Maria Chiara et al**
**Racheli & C. s.r.l.,**
**Viale San Michele del Carso, 4**
**20144 Milano (IT)**

(56) References cited:
**US-A- 1 383 402**     **US-A- 5 397 278**

- **PATENT ABSTRACTS OF JAPAN vol. 002, no. 083 (M-026), 6 July 1978 & JP 53 052852 A (MITSUBISHI AGRICULT MACH CO LTD/SATO ZOKI), 13 May 1978,**
- **SOVIET PATENT ABSTRACTS Section PQ, Week 9313 Derwent Publications Ltd., London, GB; Class Q64, AN 93-108321 XP002049050 & SU 1 728 556 A (TULA POLY) , 23 April 1992**
- **PATENT ABSTRACTS OF JAPAN vol. 017, no. 690 (M-1530), 16 December 1993 & JP 05 231500 A (NISSAN MOTOR CO LTD), 7 September 1993,**
- **PATENT ABSTRACTS OF JAPAN vol. 097, no. 006, 30 June 1997 & JP 09 042423 A (TSUBAKIMOTO CHAIN CO), 14 February 1997,**

## Description

The invention refers to the field of sprocket wheels for roller drive chains. The sprocket wheels currently used have various types of tooth profiles; in particular, one widely used standardized type of wheel has teeth with a pointed shape and with a root having a profile shaped like an arc of a circle with a radius r substantially corresponding to the radius of a roller of the chain, and with the centre on the pitch circle of the sprocket wheel.

A problem with roller chains and chain wheels according to the known art, consists in a considerable noise. The noise is due partly to the rolls of the chain coming into contact with the surfaces of the sprocket teeth, partly to the so-called "rise and fall" of the chain.

Attempts have long been made to overcome this drawback and various solutions have been proposed.

One proposed solution consists in so-called "silent chains". These comprise links with a particular shape to cooperate with sprocket wheels which are also of a particular shape matching the links, so that the links and sprockets enter gradually into contact with each other, avoiding a sudden contact and the related noise.

United States patent No. 5 397 278, in the name of SUZUKI et al., describes a sprocket wheel for chains suitable for use with conventional roller chains, which decreases the impact between the rollers and the sprocket during operation. The toothing of the SUZUKI sprocket has on the leading face of one tooth and the trailing face of the preceding tooth, two "meshing" points, on which the roller of the chain rests without going so far as to touch the bottom of a space between the teeth, or the root of the tooth, which is made particularly deep. The surface of the distal part of the tooth profile is made like the arc of a circle with a radius R, where R is the distance between the centre of a roller resting in the space between the teeth adjacent to that defined by the particular profile and the meshing point on the said profile. In other words, the distal surface of the leading face of a tooth, according to SUZUKI, is defined by the envelope of circles of the same diameter as that of the rollers, which move according to a circumference that has a radius equal to the pitch between chain rollers and a centre positioned in the centre of a roller situated in the adjacent space between teeth. Although SUZUKI has probably brought an improvement in the field, it nevertheless does not eliminate the noisiness due to the rise and fall of the chain.

Japanese Patent Publication N. 53052852 discloses a sprochet according to the preamble of claim 1.

Since a clothoid is used for defining the flank shape of the tooth, this patent is not related to an involute profile and doesn't achieve the aims of the present invention.

The object of the present invention is to obtain a roller-chain coupling that is an absolute improvement over anything known in the field as regards silentness. A further object is to eliminate, or reduce as far as possible, both the noisiness due to impacts between the rollers and the sprocket, and the noisiness due to the rise and fall of the chain.

These objects have been achieved with a sprocket as defined in claim 1. Further characteristics are stated in the subsequent claims.

The new sprocket wheel has a tooth profile comprising a proximal portion shaped like the arc of a circle with a radius equal to or slightly greater than the radius of the chain rollers, then an intermediate portion defined by a complex line; and lastly possibly a distal portion formed according to an arc of a circle having a radius R, equal to the difference between the pitch of the chain rollers and the radius of a roller, and with the centre corresponding to the centre of a roller resting on the bottom of a space between adjacent teeth.

The new sprocket wheel allows the chain roller to come into contact with the sprocket teeth gradually, with no sudden impact. Moreover, it allows gradual engagement of the rollers and the wheel, always maintaining the chain at the same level with respect to the axis of the wheel, and thus avoiding rise and fall of the chain, and allows the rollers and the sprocket to mesh with a lead angle with respect to conventional assemblies.

A sprocket wheel of the invention will be described in greater detail below, by way of an unrestrictive explanatory embodiment, with reference to the attached drawings, in which:

Figure 1 is an explanatory drawing of a sprocket wheel for roller chains according to the prior art: the rollers of a portion of chain are shown engaged in the wheel;

Figure 2 is an illustration of a sprocket wheel according to the present invention, engaged with a roller chain;

Figure 3 is an enlarged view of a portion of the sprocket wheel profile according to the invention, compared with a portion of sprocket wheel profile according to the prior art (drawn with dashed lines); some basic parameters of the sprocket are defined in this figure;

Figure 4 shows an enlarged profile of a tooth of the sprocket wheel according to the invention: a chain roller engaged with the sprocket is also shown;

Figure 5 shows a further enlargement of the new tooth profile.

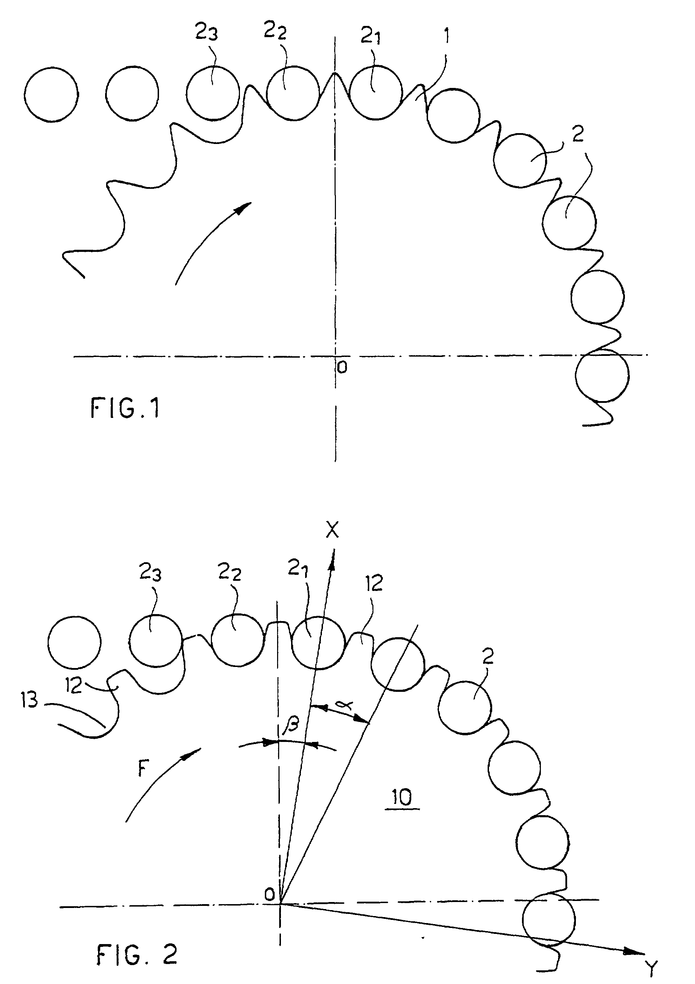

Figure 1 shows a conventional sprocket wheel for chains, referenced 1, and a conventional roller chain, of which only the rollers are shown, referenced 2; in particular, the rollers are referenced $2_1$, $2_2$, $2_3$, etc., indicating that $2_1$ meshes first, then $2_2$ etc. Sprocket 1 is illustrated turning in a clockwise direction. It will be seen that as it engages the rollers 2, it is subjected to the impact of each said roller when it is received at the bottom of the cavity between two successive teeth. This is a first cause of noisiness in the known chain drive. A further cause is due to the fact that, after a roller 2 has engaged a relative cavity referenced 3 in the drawing, it is raised and then lowered again, as the chain rotates; thus the upper course of the chain undergoes a movement generally known as "rise and fall" which also contributes to increasing the noisiness of this type of drive.

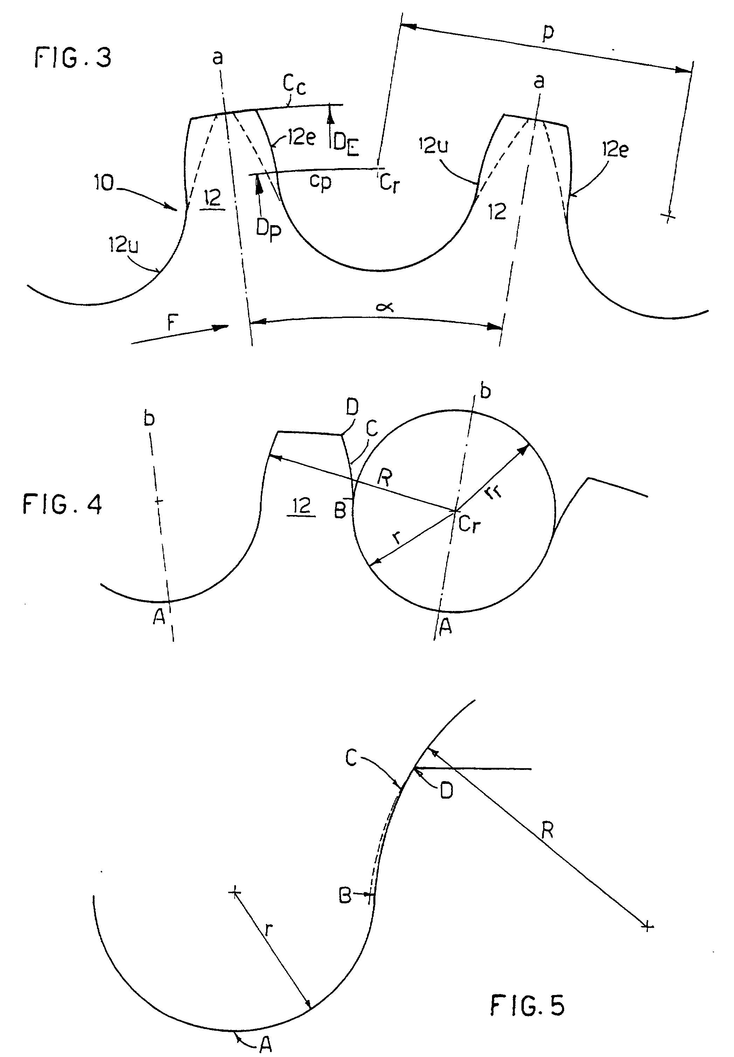

The new tooth profile for chain sprocket wheels according to the present invention will be described below. It is drawn with a continuous line in Figure 3 whilst a conventional profile according to US ANSI standards is indicated by a dashed line.

As can be seen in Figures 2-4, the new wheel 10 has teeth 12 separated by spaces 13; the teeth 12 have a considerably widened distal part compared with conventional profiles, the number of teeth being the same. In figure 3 some important parameters for definition of the profile according to the invention have been indicated. They are listed below:

p is the sprocket pitch, which coincides with the chain pitch, that is to say with the linear distance between the axes $C_r$ of two successive rollers;

$D_p$ is the pitch diameter, that is to say the diameter of the pitch circle $C_P$ defined by the centres of the rollers of the part of the chain wound on the sprocket;

$D_E$ is the diameter of the outer circle $C_E$, or maximum circle of the sprocket, which is defined by standards;

$\alpha$ is the angle between the central radial axes $\underline{a}$ of two successive teeth;

z is the number of teeth in the wheel;

$r_r$ is the radius of a roller of the chain.

Having defined the direction of rotation of the sprocket in the direction of the arrow F, the leading profile 12e and the trailing profile 12u of the tooth are one a mirror image of the other, that is each tooth is symmetrical with respect to a radial plane having as its track the radial axis $\underline{a}$.

The profile 12e according to the invention will now be described. With reference to a radial symmetry plane, of the space 13 between two teeth (indicated with the axis $\underline{b}$), for the profile 12e (or 12u) of a tooth 12 the following portions are defined, delimited by points A, B, C and D; portion AB is henceforth called the proximal portion, portion B-C the intermediate portion, portion C-D the distal portion.

Point A is the intersection between the axis of symmetry $\underline{b}$ of the space between two teeth and the root of the tooth (or bottom of the space);

Point B is the intersection between the pitch circle $C_p$ and the circle defined by a roller that rests in A.

Point C is defined as the intersection between the distal curve or distal portion and the intermediate curve or portion.

Point D is the meeting point of the profile 12e with the external circle diameter DE.

The proximal portion A-B of the tooth profile is an arc of a circumference with a radius r equal to or slightly greater than the radius $r_r$ of a roller of the chain, with the centre $C_r$ on the intersection between the pitch circle and the axis $\underline{b}$.

The intermediate portion B-C is defined with the following system of equations:

$$\begin{cases} f(x, y, \beta) = 0 \\ \dfrac{d}{d\beta} f(x, y, \beta) = 0 \end{cases} \qquad 0 < \beta < \alpha$$

with:

$$f(x, y, \beta) = \left\{ x \cdot [(R_p \cdot \sin\beta - \sqrt{-R_p^2 + 2R_p^2 \cdot \cos\beta - R_p^2 \cdot (\cos\beta)^2 + p^2} - (n-1) \cdot p) \cdot \right.$$

$$\left. \cdot \cos(n \cdot \alpha - \beta) + R_p \cdot \sin(n \cdot \alpha - \beta)]\right\}^2 + \left\{ y - [-(R_p \cdot \sin\beta - \right.$$

$$+ \sqrt{-R_p^2 + 2 \cdot R_p^2 \cdot \cos\beta - R_p^2 \cdot (\cos\beta)^2 + p^2} - (n-1) \cdot p) \cdot \sin(n \cdot \alpha - \beta) +$$

$$\left. + R_p \cdot \cos(n \cdot \alpha - \beta)]\right\}^2 - r^2$$

wherein:

x and y are Cartesian coordinates defined with reference to a point of origin O on the axis of the sprocket; x extends along the radial symmetry axis of a cavity or space;

$R_p$ is the radius of the pitch circle of the sprocket: $R_p = \frac{1}{2} D_p$

β is the angle that defines the position of a first roller or cavity between the teeth with respect to x

n is the number of rollers meshing simultaneously on the sprocket, with n=1, 2, 3, 4, etc.

whilst, as stated above, $\alpha$ is the angle between two teeth and p is the pitch.

The solution of the system by points, for various values of β, $\alpha$ and n, shows that portion B-C is a complex curve, made up of a series of portions of curves. In Figure 5 the curve BC is illustrated, whilst the continuation of the arc CD with radius R is shown dashed.

Portion C-D is an arc of a circumference with a radius R equal to (p-$r_r$), that is, equal to the pich of the sprocket (and of the chain) minus the radius of the roller and with a centre $C_r$ on the pitch circle and on the axis b of an adjacent space. The portion C-D can have a bevel or be radiused in the vicinity of point D.

The new profile thus defined has the advantage of allowing the rollers and teeth to enter into contact with each other gradually (see Figure 2). Each roller, in the position $2_2$ is already well supported on the tooth so as to avoid sudden impacts between the roller and the wheel. Furthermore, it allows each roller to be supported in each stage of engagement with the sprocket substantially on the same line as the course of the taut portion of the chain, thus avoiding the "rise and fall".

The length of the portion C-D of the profile according to the invention can be very small or even nil; that is, the pre-established aims stated above are achieved even with a sprocket in which the profile of the teeth comprises only the "proximal" portion A-B and the "intermediate" portion B-C.

## Claims

1. A sprocket wheel for roller chains for a chain drive, of the type comprising teeth extending radially and forming spaces between them to accommodate the rollers of the chain; wherein a pitch circle, an external circle, a number of teeth, a pitch, an angle between teeth, are defined in said sprocket wheel, wherein the profile of each tooth comprises: a proximal portion (A-B) which is shaped like an arc of a circle with a radius equal to or greater than the radius of each roller of the chain; and an intermediate portion (B-C) which has a complex curvature; **characterized in that** the complex curvature of the intermediate portion of the tooth profile is defined with the following system:

$$\begin{cases} f(x,y,\beta) = 0 \\ \dfrac{d}{d\beta}\; f(x,y,\beta) = 0 \end{cases} \quad 0 < \beta < \alpha$$

with:

$$f(x, y, \beta) = \left\{ x \cdot [(R_p \cdot \sin\beta - \sqrt{-R_p^2 + 2R_p^2 \cdot \cos\beta - R_p^2 \cdot (\cos\beta)^2 + p^2} - (n-1) \cdot p) \cdot \right.$$

$$\left. \cdot \cos(n \cdot \alpha - \beta) + R_p \cdot \sin(n \cdot \alpha - \beta)] \right\}^2 + \left\{ y - \left[ -\left( R_p \cdot \sin\beta - \right. \right. \right.$$

$$+ \sqrt{-R_p^2 + 2 \cdot R_p^2 \cdot \cos\beta - R_p^2 \cdot (\cos\beta)^2 + p^2} - (n-1) \cdot p) \cdot \sin(n \cdot \alpha - \beta) +$$

$$+ R_p \cdot \cos(n \cdot \alpha - \beta)] \right\}^2 - r^2$$

wherein:

x and y are Cartesian coordinates defined with reference to a point of origin O on the axis of the sprocket, x extends along the axis of a cavity between the teeth;

p is the pitch

$R_p$ is the radius of the pitch circle of the sprocket: $R_p = \frac{1}{2} D_p$

$\alpha$ is the angle between two consecutive teeth

$\beta$ is the angle that defines the position of a first roller or cavity between teeth with respect to x

n is the number of rollers meshing simultaneously on the sprocket, with n=1, 2, 3, 4, etc.

2. A sprocket wheel according to claim 1, **characterized in that** it further comprises a distal part (C-D) curved according to a radius ( R ) equal to the pitch minus the radius of the roller and with the centre on the pitch circle and on the axis of symmetry of a space adjacent to the tooth considered.

3. A sprocket wheel according to claim 1, **characterized in that** each face profile (12e, 12u) of the tooth is a mirror image of the other face profile.

4. A sprocket wheel according to claim 2 **characterized in that** roundings or bevellings are provided between the distal portion of the tooth profile and the outer circle.

5. A sprocket wheel according to claim 3 **characterized in that** the intermediate portion with a complex curvature extends from a point (B) defined as the intersection between the tooth profile and the pitch circle and a point ( C ) defined as the intersection between the intermediate portion and the distal portion of the profile.

**Patentansprüche**

1.  Ein Zahnrad für Rollenketten für ein Kettengetriebe des Typs, der sich radial erstreckende Zähne umfaßt, die Zwischenräume zwischen sich bilden, um die Rollen der Kette aufzunehmen, wobei in dem genannten Zahnrad ein Wälzkreis, ein äußerer Kreis, eine Anzahl von Zähnen, eine Teilung, ein Winkel zwischen den Zähnen gebildet werden, wobei das Profil jedes Zahns folgendes umfaßt: einen Proximalteil (A-B), der wie ein Kreisbogen geformt ist, mit einem Radius, der dem Radius jeder Rolle der Kette entspricht oder diesen überschreitet, und einen Zwischenteil (B-C), der eine komplexe Bogenlinie aufweist, **dadurch gekennzeichnet, daß** die komplexe Bogenlinie des Zwischenteils des Zahnprofils durch folgendes System bestimmt wird:

$$\begin{cases} f(x,y,\beta) = 0 \\ \dfrac{d}{d\beta}\, f(x,y,\beta) = 0 \end{cases} \qquad 0 < \beta < \alpha$$

bei:

$$f(x,y,\beta) = \left\{ x \cdot \left[ \left( R_p \cdot \sin\beta - \sqrt{-R_p^2 + 2R_p^2 \cdot \cos\beta - R_p^2 \cdot (\cos\beta)^2 + p^2} - (n-1)\cdot p \right) \cdot \right. \right.$$
$$\left. \cdot \cos(n\cdot\alpha-\beta) + R_p \cdot \sin(n\cdot\alpha-\beta) \right]\Big\}^2 + \left\{ y - \left[ - \left( R_p \cdot \sin\beta - \right. \right. \right.$$
$$\left. - \sqrt{-R_p^2 + 2\cdot R_p^2 \cdot \cos\beta - R_p^2 \cdot (\cos\beta)^2 + p^2} - (n-1)\cdot p \right) \cdot \sin(n\cdot\alpha-\beta) +$$
$$+ R_p \cdot \cos(n\cdot\alpha-\beta) \Big]\Big\}^2 - r^2$$

wobei:

x und y Kartesische Koordinaten sind, die in Bezug auf einen Ausgangspunkt O auf der Achse des Zahnrads ausgebildet werden, und x sich entlang der Achse einer Aushöhlung zwischen den Zähnen erstreckt;

p die Teilung ist

Rp der Radius des Wälzkreises des Zahnrads ist: Rp = ½ Dp

α der Winkel zwischen zwei aufeinanderfolgenden Zähnen ist

β der Winkel ist, der die Stellung einer ersten Rolle oder Aushöhlung zwischen Zähnen im Verhältnis zu x ist

n die Anzahl der Rollen ist, die gleichzeitig am Rad in Eingriff stehen, bei n = 1, 2, 3, 4, usw.

2.  Ein Zahnrad nach Anspruch 1, **dadurch gekennzeichnet, daß** es desweiteren einen Distalteil (C-D) umfaßt, der nach einem Radius (R) gebogen ist, welcher der Teilung minus dem Radius der Rolle entspricht, wobei das Zentrum sich auf dem Wälzkreis und der Symmetrieachse eines am berücksichtigten Zahn liegenden Raums befindet.

3.  Ein Zahnrad nach Anspruch 1, **dadurch gekennzeichnet, daß** jedes Flächenprofil (12e, 12u) des Zahns ein Spiegelbild des anderen Flächenprofils ist.

4.  Ein Zahnrad nach Anspruch 2, **dadurch gekennzeichnet, daß** Rundungen oder Abfasungen zwischen dem Distalteil des Zahnprofils und dem äußeren Kreis vorgesehen sind.

5. Ein Zahnrad nach Anspruch 3, **dadurch gekennzeichnet, daß** der Zwischenteil mit komplexer Rundung sich von einem Punkt (B), der als Schnittpunkt zwischen dem Zahnprofil und dem Wälzpunkt ausgebildet ist, zu einem einem Punkt (C) erstreckt, der als Schnittpunkt zwischen dem Zwischenteil und dem Distalteil des Profils ausgebildet ist.

**Revendications**

1. Couronne dentée pour chaînes à rouleaux pour une transmission à chaîne, de type comprenant des dents s'étendant dans le sens radial et formant des espaces entre elles pour accueillir les rouleaux de la chaîne; où un cercle primitif, un cercle extérieur, un nombre de dents, un pas et un angle entre les dents sont définis dans ladite couronne dentée où le profil de chaque dent comprend: une partie proximale (A-B) ayant une forme en arc de cercle avec un rayon égal à ou supérieur au rayon de chaque rouleau de la chaîne et une partie intermédiaire (B-C) ayant une courbure complexe; **caractérisée par le fait que** la courbure complexe de la partie intermédiaire du profil de la dent est définie par le système suivant:

$$\begin{cases} f(x,y,\beta) = 0 \\ \dfrac{d}{d\beta}\, f(x,y,\beta) = 0 \end{cases} \qquad 0 < \beta < \alpha$$

avec:

$$f(x,y,\beta) = \left\{ x + \left[ (R_p \cdot \sin\beta - \sqrt{-R_p^2 + 2R_p^2 \cdot \cos\beta - R_p^2 \cdot (\cos\beta)^2 + p^2} - (n-1)\cdot p) \cdot \right. \right.$$
$$\left. \cdot \cos(n\cdot\alpha - \beta) + R_p \cdot \sin(n\cdot\alpha - \beta) \right]\}^2 + \left\{ y - \left[ -\left( R_p \cdot \sin\beta - \right.\right.\right.$$
$$\left. + \sqrt{-R_p^2 + 2\cdot R_p^2 \cdot \cos\beta - R_p^2 \cdot (\cos\beta)^2 + p^2} - (n-1)\cdot p \right) \cdot \sin(n\cdot\alpha - \beta) +$$
$$\left. + R_p \cdot \cos(n\cdot\alpha - \beta) \right]\}^2 - r^2$$

où:

x et y sont des coordonnées cartésiennes définies par rapport à un point d'origine O sur l'axe de la couronne dentée, x s'étend le long de l'axe d'une cavité entre les dents;
p est le pas
$R_p$ est le rayon du cercle primitif de la couronne: $R_p = \frac{1}{2} D_p$
$\alpha$ est l'angle entre deux dents consécutives
$\beta$ est l'angle qui définit la position d'un premier rouleau ou d'une première cavité entre les dents par rapport à x
n est le nombre de rouleaux simultanément en prise sur la couronne, avec n=1, 2, 3, 4, etc...

2. Une couronne dentée selon la revendication 1, **caractérisée par le fait qu'**elle comprend en outre une partie distale (C-D) courbe selon un rayon ( R ) égal au pas moins le rayon du rouleau et avec le centre sur le cercle primitif et sur l'axe de symétrie d'un espace adjacent à la dent prise en considération.

3. Une couronne dentée selon la revendication 1, **caractérisée par le fait que** chaque dent a le profil (12e, 12u) de ses deux côtés spéculaire l'un par rapport à l'autre.

4. Une couronne dentée selon la revendication 2, **caractérisée par le fait que** des arrondis ou des biseaux sont prévus entre la partie distale du profil de la dent et le cercle extérieur.

**5.** Une couronne dentée selon la revendication 3, **caractérisée par le fait que** la partie intermédiaire à courbure complexe s'étend d'un point (B) défini comme l'intersection entre le profil de la dent et le cercle primitif à un point (C) défini comme l'intersection entre la partie intermédiaire et la partie distale du profil.

FIG.1

FIG. 2

9

FIG. 3

FIG. 4

FIG. 5